(19) Europäisches Patentamt
European Patent Office
Office européen des brevets

(11) **EP 4 474 430 A1**

(12) **EUROPEAN PATENT APPLICATION**
published in accordance with Art. 153(4) EPC

(43) Date of publication:
**11.12.2024 Bulletin 2024/50**

(21) Application number: 23747137.0

(22) Date of filing: **30.01.2023**

(51) International Patent Classification (IPC):
**C08L 101/00** (2006.01)   **C08K 5/01** (2006.01)
**C08L 23/00** (2006.01)   **C08L 67/00** (2006.01)
**C08L 91/00** (2006.01)

(52) Cooperative Patent Classification (CPC):
**C08K 5/01; C08L 23/00; C08L 67/00; C08L 91/00; C08L 101/00**

(86) International application number:
**PCT/JP2023/002812**

(87) International publication number:
**WO 2023/145927 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2022 JP 2022013133**

(71) Applicant: **MCPP Innovation LLC Tokyo 100-8251 (JP)**

(72) Inventors:
• **OZAMA, Yoko**
  **Tokyo 100-8251 (JP)**
• **YAMAGISHI, Miyu**
  **Tokyo 100-8251 (JP)**
• **SANO, Mayu**
  **Tokyo 100-8251 (JP)**

(74) Representative: **Vossius & Partner Patentanwälte Rechtsanwälte mbB Siebertstrasse 3 81675 München (DE)**

(54) **THERMOPLASTIC ELASTOMER COMPOSITION AND MOLDED ARTICLE THEREOF**

(57)    A thermoplastic elastomer composition containing the components (A) to (C) listed below. The component (C) has a kinematic viscosity at 40°C of 20 cSt or more and 8000 cSt or less. Or the component (C) has a main structural unit identified from a mass spectrum obtained by measuring the component (C) by FD-MS is represented by at least one of the molecular formulas $C_{16}H_{34}$ and $C_{16}H_{32}$. Or else, the component (C) contains as a main component at least one of the compounds represented by the molecular formulas $C_nH_{2n+2}$ and $C_nH_{2n}$ ($40 \leq n < 60$), which are identified from a mass spectrum obtained by measuring the component (C) by FD-MS. component (A): thermoplastic resin, component (B): elastomer, component (C): isoalkane mixture

Fig.1

"VIVA-B-FIX 10227" manufactured by H&R

Creation conditions:
Average (MS[1] Elapsed time: 0.06, 0.45) - 1.0 *Average (MS[1] Elapsed time: 0.52, 0.58): Base correction []

Ionizatior mode: FD+ (eiFi)

EP 4 474 430 A1

**Description**

Technical Field

The present invention relates to a thermoplastic elastomer composition and molded article thereof.

Background Art

Thermoplastic elastomers have molding processability similar to that of thermoplastic resins, and also have a unique rubber elasticity. Thermoplastic resins and thermoplastic elastomers can be recycled, so they are widely used, and examples of the uses include those in automotive parts, building components, medical components, electric wire covering materials, food components, packaging materials, sundry goods, clothing supplies, sporting goods, and the like.

For example, thermoplastic elastomer compositions are known in which a specific hydrogenated block copolymer, a non-aromatic-based softening agent for rubber having a kinematic viscosity of 100 cSt or more at 40°C, and a polyolefin resin are blended in specific proportions.

(Patent Literature 1)

Citation List

Patent Literature

PTL1: JP 2000-169666 A

Summary of Invention

Technical Problem

In recent years, regarding automotive interior spaces, demand for an increased luxury feel and for comfort has been increasing, so that various designs of automotive interior spaces have been proposed. Furthermore, as universal design has become widespread in applications such as sundry goods, product shapes are becoming more complex. In such applications, thermoplastic elastomers have been required to have better moldability.

Additionally, with increasing awareness of environmental issues, there is a demand for lighter materials, especially for automotive applications. From the same viewpoint, the use of thermoplastic elastomers as a substitute for vulcanized rubber is also attracting attention, and particular emphasis has been placed on having good rubber elasticity.

Furthermore, since thermoplastic elastomers used in a wide range of applications are used in various temperature environments, there are concerns about weight loss and bleed-out due to the volatilization of low-boiling components.

Under these circumstances, the thermoplastic elastomer composition described in Patent Literature 1 has insufficient bleed-out resistance under certain conditions, and there is room for improvement.

The present invention has been made in view of these conventional problems. Objects of the present invention are to provide a thermoplastic elastomer composition having not only good moldability and rubber elasticity, but also allowing a resin to be made lighter and having excellent bleed-out resistance, and to provide a molded article thereof.

Solution to Problem

The present inventors have found that a thermoplastic elastomer composition containing specific components (A), (B), and (C) below can solve the above problems.

That is, the gist of the present invention is as follows.

[1] A thermoplastic elastomer composition comprising the components (A) to (C) listed below, wherein the component (C) has a kinematic viscosity at 40°C of 20 cSt or more and 8000 cSt or less.

component (A): thermoplastic resin
component (B): elastomer
component (C): isoalkane mixture

[2] The thermoplastic elastomer composition according to [1], wherein the component (C) has a kinematic viscosity at 40°C of 20 cSt or more and 3000 cSt or less.

[3] A thermoplastic elastomer composition comprising the components (A) to (C) listed below, wherein a main structural unit identified from a mass spectrum obtained by measuring the component (C) by FD-MS is represented by at least one of the molecular formulas $C_{16}H_{34}$ and $C_{16}H_{32}$. component (A): thermoplastic resin

component (B): elastomer
component (C): isoalkane mixture

[4] The thermoplastic elastomer composition according to [3], wherein the component (C) contains as a main component at least one of the compounds represented by the molecular formulas $C_{48}H_{96}$ and $C_{48}H_{98}$, which are identified from the mass spectrum obtained by measuring the component (C) by FD-MS.

[5] A thermoplastic elastomer composition comprising the components (A) to (C) listed below, wherein the component (C) is an isoalkane mixture containing as a main component at least one of the compounds represented by the molecular formulas $C_nH_{2n}+_2$ and $C_nH_{2n}$ ($40 \leqq n < 60$), which are identified from a mass spectrum obtained by measuring the component (C) by FD-MS.

component (A): thermoplastic resin
component (B): elastomer
component (C): isoalkane mixture

[6] The thermoplastic elastomer composition according to [5], wherein the component (C) further comprises at least one of the compounds represented by the molecular formulas $C_nH_{2n}+_2$ and $C_nH_{2n}$ ($30 \leqq n < 40$), which are identified from the mass spectrum obtained by measuring the component (C) by FD-MS.

[7] The thermoplastic elastomer composition according to [5], wherein the component (C) further comprises at least one of the compounds represented by the molecular formulas $C_nH_{2n}+_2$ and $C_nH_{2n}$ ($60 \leqq n \leqq 80$), which are identified from the mass spectrum obtained by measuring the component (C) by FD-MS.

[8] The thermoplastic elastomer composition according to [5], wherein the component (C) further comprises at least one of the compounds represented by the molecular formulas $C_nH_{2n}+_2$ and $C_nH_{2n}$ ($30 \leqq n < 40$) and at least one of the compounds represented by the molecular formulas $C_nH_{2n}+_2$ and $C_nH_{2n}$ ($60 \leqq n \leqq 80$), which are identified from the mass spectrum obtained by measuring the component (C) by FD-MS.

[9] The thermoplastic elastomer composition according to any one of [1] to [8], wherein the component (C) is derived from a biomass material.

[10] The thermoplastic elastomer composition according to [9], having a biomass degree of 1% or more and 100% or less according to ASTM D 6866-22.

[11] The thermoplastic elastomer composition according to any one of [1] to [10], wherein the thermoplastic resin of the component (A) contains at least one of a polyolefin resin and a polyester resin.

[12] The thermoplastic elastomer composition according to any one of [1] to [11], wherein the elastomer of the component (B) contains at least one of an olefin elastomer, a styrene elastomer, and a polyester elastomer.

[13] The thermoplastic elastomer composition according to any one of [1] to [12], wherein the composition comprises 10 parts by mass or more and 400 parts by mass or less of the component (C) based on 100 parts by mass of the component (B) .

[14] The thermoplastic elastomer composition according to any one of [1] to [13], wherein the component (C) has a pour point of -50° C or higher and 0° C or lower.

[15] The thermoplastic elastomer composition according to any one of [1] to [14], wherein the component (C) contains an isoalkane having a side chain alkyl group.

[16] The thermoplastic elastomer composition according to [15], wherein the alkyl group is an alkyl group having 1 to 18 carbon atoms.

[17] The thermoplastic elastomer composition according to [16], wherein the alkyl group is a methyl group.

[18] The thermoplastic elastomer composition according to any one of [1] to [17], further comprising a hydrocarbon-based softening agent for rubber, the softening agent being other than the component (C).

[19] The thermoplastic elastomer composition according to [18], wherein the content of the component (C) is 1% by mass or more and 99% by mass or less based on a total content of the component (C) and the hydrocarbon-based softening agent for rubber.

[20] A molded article obtained by molding the thermoplastic elastomer composition according to any one of [1] to [19].
Advantageous Effects of Invention

According to the present invention, it is possible to provide a thermoplastic elastomer composition that not only has good moldability and rubber elasticity, but also allows the resin to be made lighter and has excellent bleed-out resistance, and a molded article thereof.

The thermoplastic resin composition of the present invention and its molded article are expected to be used in a wide range of applications, such as automotive parts, building components, medical components, food components, packaging materials, sundry goods, clothing supplies, sporting goods, and the like.

Brief Description of Drawings

[Fig. 1] Fig. 1 is a chart showing an example of an FD-MS spectrum.
[Fig. 2] Fig. 2 is a chart showing another example of an FD-MS spectrum.
[Fig. 3] Fig. 3 is a chart showing another example of an FD-MS spectrum.

Description of Embodiments

Embodiments of the present invention will be described in detail below. The explanation of the constituent elements described below is an example of the embodiment of the present invention, and the present invention is not limited to the following description unless it exceeds the gist thereof.

In this specification, when numerical values or physical property values are expressed by using "to" with preceding and following numbers, it is to be understood that the preceding and following numbers are included. In addition, numerical values or physical property values described as upper limits and lower limits are used in a meaning that includes those values.

[Thermoplastic elastomer composition]

The thermoplastic elastomer composition of the present invention contains the following components (A) to (C).

Component (A): thermoplastic resin (hereinafter sometimes referred to as "thermoplastic resin (A)")
Component (B): elastomer (hereinafter sometimes referred to as "elastomer (B)")
Component (C): isoalkane mixture (hereinafter sometimes referred to as "isoalkane mixture (C)")

The thermoplastic elastomer composition according to the first embodiment of the present invention is characterized in that the component (C) has a kinematic viscosity at 40°C of 20 cSt or more and 8000 cSt or less.

The thermoplastic elastomer composition according to the second embodiment of the present invention is characterized in that a main structural unit identified from a mass spectrum (FD-MS) obtained by measuring the component (C) is represented by at least one of the molecular formulas $C_{16}H_{34}$ and $C_{16}H_{32}$.

The thermoplastic elastomer composition according to the third embodiment of the present invention is characterized in that the component (C) contains as a main component at least one of the compounds represented by the molecular formulas $C_nH_{2n}+_2$ and $C_nH_{2n}$ ($40 \leqq n < 60$), which are identified from a mass spectrum (FD-MS) obtained by measuring the component (C).

When the configuration of the component (C) in each of the above embodiments satisfies solely the condition of each embodiment, then the configuration of the component (C) satisfies the conditions of each embodiment, so that the configurations of other embodiments are considered to be preferable configurations. That is, it is preferable that the component (C) in the first embodiment satisfies at least one of the conditions in the second embodiment and the conditions in the third embodiment, and it is more preferable to satisfy both of these conditions. Further, in each of the second embodiment and the third embodiment, the conditions of the other embodiments have the same meaning as preferable conditions.

[mechanism]

According to the thermoplastic elastomer composition of the present invention, not only good moldability can be obtained, but also the weight of the resin can be reduced. According to the thermoplastic elastomer composition of the present invention, it is also possible to obtain a molded article having good rubber elasticity and excellent bleed-out resistance.

Although the details of the reason why the thermoplastic elastomer composition of the present invention exhibits such effects are not clear, it is presumed as follows.

The thermoplastic elastomer composition of the present invention contains the thermoplastic resin (A) and the elastomer (B), and further contains the isoalkane mixture (C) having kinematic viscosity at 40°C of within a specific range, or the isoalkane mixture (C) having specific characteristics specified by the mass spectrum obtained by measuring by FD-MS. Therefore, due to the entanglement of the elastomer (B) and the isoalkane mixture (C), the affinity between the elastomer (B) and the isoalkane mixture (C) increases, and the plasticization of the elastomer (B) is promoted. As a result, it is presumed that a molded article having excellent moldability, bleed-out resistance, and rubber elasticity can be obtained. Furthermore, since the isoalkane mixture (C) is an alkane, it has a light specific gravity, and it is possible to lower the specific gravity of the thermoplastic elastomer composition. When the isoalkane mixture (C) further has a side chain alkyl group, preferably a side chain alkyl group having 1 to 18 carbon atoms, it becomes easier to obtain the entanglement effect of the elastomer (B) and the isoalkane mixture (C) described above. As a result, stable fluidity can be obtained, and molded articles having excellent heat resistance and other mechanical strengths can be obtained.

The fact that the isoalkane mixture (C) has specific characteristics identified by the mass spectrum obtained by measuring by FD-MS indicates that the amount of lowviscosity components is small compared to conventionally known softening agents for rubber. Therefore, it is thought that it becomes easier to obtain a molded article having excellent bleed-out resistance. Similarly, this means that the amount of high viscosity components is also small compared to conventionally known softening agents for rubber. Therefore, it can be inferred that the affinity between the elastomer (B) and the isoalkane mixture (C) increases, and a molded article having excellent moldability and rubber elasticity can be obtained.

[Component (A): Thermoplastic resin]

As the thermoplastic resin of the component (A), known thermoplastic resins can be used. Examples of the thermoplastic resin include olefin resins such as propylene-based polymers, ethylene-based polymers, and the like; ester resins such as polyethylene terephthalate, polybutylene terephthalate, and the like; amide resins such as nylon 6, nylon 66, and the like; styrene resins such as polystyrene, and the like; acrylic resins such as polymethyl methacrylate, and the like; carbonate resins such as polycarbonate, and the like; polyoxymethylene resins such as polyoxymethylene copolymers, and the like; polyphenylene ether resins; polyvinyl chloride resins; and the like. Among these thermoplastic resins, olefin resins and ester resins are preferred from the viewpoint of lightness and mechanical properties.

These thermoplastic resins may be used alone or in a mixture of two or more.

Although a molecular weight of these thermoplastic resins is not particularly limited, it is preferable that the thermoplastic resin contains a resin having a weight average molecular weight of 500 to 1,500,000 as measured by gel permeation chromatography (GPC). The weight average molecular weight is more preferably 1,000 to 1,000,000, and even more preferably 2,000 to 500,000.

Among the thermoplastic resins of the component (A), examples of propylene-based polymers include propylene homopolymers, and propylene-based copolymers that are random or block copolymers of polypropylene and ethylene or $\alpha$-olefins such as butene-1, hexene-1, and the like.

A melt flow rate (JIS K7210, at 230°C, and under a load of 21.2 N) of the propylene-based polymer is not particularly limited, but is typically 0.05 to 200 g/10 minutes. The melt flow rate is preferably 0.05 to 100 g/10 minutes and more preferably 0.1 to 80 g/10 minutes. When the melt flow rate is within the above range, good moldability is achieved, and, therefore, a resulting molded article has a good appearance. Furthermore, mechanical properties, particularly, a tensile strength at break can be controlled within a desired range.

It is also possible to use commercially available propylene-based polymers.

Commercially available polypropylene can be obtained from the manufacturers listed below, and can be selected as appropriate.

Available commercial products include Novatec (registered trademark) PP manufactured by Japan Polypropylene Corporation, Prime Polypro (registered trademark) manufactured by Prime Polymer Co., Ltd., Sumitomo Noblen (registered trademark) manufactured by Sumitomo Chemical Co., Ltd., polypropylene block copolymer manufactured by Sun Allomer Ltd., Moplen (registered trademark) and Circluen manufactured by and Lyondell Basell, ExxonMobil PP manufactured by ExxonMobil, Formolene (registered trademark) manufactured by Formosa Plastics, Borealis PP manufactured by Borealis, SEETEC PP manufactured by LG Chemical, ASI POLYPROPYLENE manufactured by A.Schulman, INEOS PP manufactured by INEOS Olefins & Polymers, Braskem PP manufactured by Braskem, Samsung Total manufactured by SAMSUNG TOTAL PETROCHEMICALS, Sabic (registered trademark) PP manufactured by Sabic, TOTAL PETROCHEMICALS Polypropylene manufactured by TOTAL PETROCHEMICALS, YUPLENE (registered trademark) manufactured by SK, and the like.

Among the thermoplastic resins of the component (A), examples of the ethylene-based polymer include high-density polyethylene, low-density polyethylene, and linear low-density polyethylene.

The ethylene-based polymer preferably has a density of 0.910 g/cm$^3$ or more and 1.00 g/cm$^3$ or less as measured by JIS K7112 from the viewpoint of achieving both mechanical strength and rubber elasticity.

A melt flow rate (JIS K7210, at 190°C, and under a load of 21.2 N) of the ethylene-based polymer is not particularly limited but is typically 0.05 to 200 g/10 minutes. The melt flow rate is preferably 0.05 to 100 g/10 minutes and more preferably 0.1 to 80 g/10 minutes. When the melt flow rate is within the above range, good moldability is achieved, and, therefore, a resulting molded article has a good appearance. Furthermore, mechanical properties, particularly, a tensile strength at break can be controlled within a desired range.

It is also possible to use commercially available ethylene-based polymers.

Commercially available ethylene-based polymers can be obtained from the manufacturers listed below, and can be selected as appropriate.

Available commercial products include Novatec (registered trademark) manufactured by Japan Polyethylene Corporation, Sumikasen (registered trademark) manufactured by Sumitomo Chemical Co., Ltd., Hizex (registered trademark), Neozex (registered trademark), and Urtozex (registered trademark) manufactured by Prime Polymer Co., Ltd, UBE polyethylene (registered trademark) manufactured by Ube-Maruzen Polyethylene Co., Ltd., Suntec (registered trademark) and Creolex (registered trademark) manufactured by Asahi Kasei Corporation, SABIC (registered trademark) manufactured by SPDC Ltd., biopolyethylene manufactured by Braskem, and the like.

[Component (B): Elastomer]

Examples of elastomers include olefin elastomers containing one or more types of ethylene-propylene-copolymer rubber (EPM), ethylene-propylene-nonconjugated diene copolymer rubber (EPDM), ethylene-butene copolymer rubber (EBM), ethylene-propylene-butene copolymer rubber, and the like; styrenic elastomers containing one or more types of styrene-butadiene-styrene copolymer (SBS), styrene-ethylenebutylene-styrene copolymer (SEBS), and the like; polyester elastomers containing one or more types of polybutylene terephthalate-polytetramethylene ether glycol copolymers (PBT-PTMG), and the like; polyamide elastomers; polyurethane elastomers; polyvinyl chloride elastomers; polybutadiene elastomers; these hydrogenated products; products in which polar functional groups are introduced by modifying these with acid anhydrides, and the like; those obtained by graft copolymerization, random copolymerization, and/or block copolymerization with other monomers, and the like.

These elastomers may be used alone or in combination of two or more.

Among the above elastomers, olefin elastomers, styrenic elastomers, and polyester elastomers are preferred from the viewpoint of lightness and mechanical properties. Further, from the viewpoint of interaction with the component (C), olefin elastomers and styrenic elastomers are more preferred.

As the olefin elastomer, an ethylene-propylene copolymer elastomer having a Mooney viscosity $ML_{1+4}$ (125°C) of 30 to 300 is preferred, and ethylene-propylene-nonconjugated diene copolymer rubber (EPDM) is particularly preferred. The EPDM may be an oil-extended type that contains pre-mixed oil, a non-oil-extended type that does not contain oil, or a combination of these. Non-oil-extended EPDM, which does not contain pre-mixed oil, is economically inexpensive. On the other hand, oil-extended EPDM tends to improve mechanical properties and moldability. As mentioned above, it is preferable to use any type of EPDM in a state where the Mooney viscosity $ML_{1+4}$ (125°C) in a state containing oil is 30 to 100, particularly 35 to 80.

Examples of the non-conjugated diene include dicyclopentadiene, 1,4-hexadiene, cyclooctadiene, methylene norbornene, ethylidene norbornene, and the like. Ethylidene norbornene is particularly preferred as the non-conjugated diene.

A preferred specific example of the olefin elastomer is EPDM having an ethylene unit content of 55 to 75% by mass and a non-conjugated diene unit content of 1 to 10% by mass. When the content of ethylene units is 55% by mass or more, extrusion moldability tends to be good, and when the content of ethylene units is 75% by mass or less, flexibility tends to be easily maintained.

Commercially available products can be used as such olefin elastomers.

Commercially available products include "EP Rubber" manufactured by ENEOS Materials Corporation, "Mitsui EPT" manufactured by Mitsui Chemicals Inc., "Esplen (registered trademark)" manufactured by Sumitomo Chemical Co., Ltd, "Keltan (registered trademark) " and "Keltan (registered trademark) Eco" manufactured by ARLANXEO, "NORDEL (registered trademark)" manufactured by DOW CHEMICAL Company, and "KEP" manufactured by KUMHO POLYCHEM.

As the styrenic elastomer, a block copolymer and/or a hydrogenated product thereof (which may hereinafter be referred to as a " (hydrogenated) block copolymer", the block copolymer including at least one polymer block P (which may hereinafter be referred to simply as "block P") and at least one polymer block Q (which may hereinafter be referred to simply as a "block Q"), the at least on polymer block P primarily including aromatic vinyl compound units, the at least one polymer block Q primarily including conjugated diene compound units, is preferred.

As used herein, the expression "primarily including" means that a polymer block of interest includes monomer units of interest in an amount of 50 mole % or more.

The aromatic vinyl compound that forms the block P is not particularly limited. Examples of the aromatic vinyl compound include styrene, a-methylstyrene, p-methylstyrene, divinylbenzene, 1,1-diphenylethylene, N,N-dimethyl-p-aminoethylstyrene, and N,N-diethyl-p-aminoethylstyrene. Among these, styrene, $\alpha$-methylstyrene, and p-methylstyrene are preferable from the viewpoints of availability and productivity. Styrene is more preferable.

The block P may be formed of one type of aromatic vinyl compound unit or formed of two or more types of aromatic vinyl compound units. The block P may include monomer units other than vinyl aromatic compound units.

The conjugated diene compound that forms the block Q is a diolefin having a pair of conjugated double bonds. Examples of the conjugated diene compound include, but are not limited to, 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. Among these, 1,3-butadiene and isoprene are preferable from the viewpoint of productivity. 1,3-butadiene is more preferable.

The block Q may be formed of one type of conjugated diene compound unit or formed of two or more types of conjugated diene compound units. The block Q may include monomer units other than conjugated diene compound units.

Commercially available products can also be used as such styrene elastomers.

Examples of commercially available products include "Kraton (registered trademark) G" manufactured by Kraton Polymer Corporation, "Septon (registered trademark) " and "Septon (registered trademark) Bio" manufactured by Kuraray Co., Ltd, "Tuftec (registered trademark)" and "S.O.E (registered trademark)" manufactured by Asahi Kasei Corporation, "TAIPOL (registered trademark)" manufactured by TSRC Corporation, and "GLOBAL PRENE" manufactured by LCY Corporation.

A polyester elastomer is usually a block copolymer having a hard segment having crystallinity and a soft segment having flexibility. Examples of the polyester elastomers include:

a block copolymer (hereinafter sometimes referred to as a "cyclic polyester-polyalkylene glycol block copolymer") having a hard segment consisting of cyclic polyester (hereinafter sometimes referred to as a "cyclic polyester unit"), and a soft segment consisting of polyalkylene glycol (hereinafter sometimes referred to as a "polyalkylene glycol unit"); (In this specification, the term "cyclic polyester" means a dicarboxylic acid or its alkyl ester in which the raw material of dicarboxylic acid or its alkyl ester has a cyclic structure.)
and
a block copolymer (hereinafter sometimes referred to as a "cyclic polyester-chain aliphatic polyester block copolymer") having a hard segment consisting of a cyclic polyester, and a soft segment consisting of a chain aliphatic polyester (hereinafter sometimes referred to as a "chain aliphatic polyester"). (In this specification, the term "chain aliphatic polyester" means a dicarboxylic acid or its alkyl ester in which the raw material of dicarboxylic acid or its alkyl ester has only a chain structure.)

Among these, the cyclic polyester-polyalkylene glycol block copolymer is preferred.

Examples of the cyclic polyester-polyalkylene glycol block copolymer include a copolymer having a hard segment consisting of an aromatic polyester (hereinafter sometimes referred to as "aromatic polyester unit") and a polyalkylene glycol unit (herein after sometimes referred to as "aromatic polyester-polyalkylene glycol block copolymer"), and a block copolymer having a hard segment consisting of an alicyclic polyester (hereinafter sometimes referred to as an "alicyclic polyester unit") and a polyalkylene glycol unit (hereinafter sometimes referred to as "alicyclic polyester-polyalkylene glycol block copolymer"). Among these, aromatic polyester-polyalkylene glycol block copolymers are preferred.

The aromatic polyester-polyalkylene glycol block copolymer is a known thermoplastic elastomer as described in JP H10-130451 A, and the like. As the aromatic polyester-polyalkylene glycol block copolymer, each block may be a homopolymer or a copolymer as long as it contains a polyalkylene glycol unit.

The raw material for the aromatic polyester unit will be described in detail below. The raw material for the aromatic polyester unit preferably contains polybutylene terephthalate as a hard segment.

The raw material for the polyalkylene glycol unit will also be described in detail below. The raw material for the polyalkylene glycol unit preferably contains a soft segment made from polytetramethylene ether glycol (hereinafter sometimes referred to as "polytetramethylene glycol unit").

The polyester elastomer used in the present invention is preferably a polybutylene terephthalate-polyalkylene glycol block copolymer, and more preferably a polybutylene terephthalate-polytetramethylene glycol block copolymer.

Typical examples of the alicyclic polyester-polyalkylene glycol block copolymer include, those obtained from an alicyclic dicarboxylic acid (in this specification, "alicyclic dicarboxylic acid" means a compound in which two carboxyl groups are directly bonded to a cyclic aliphatic hydrocarbon), a alicyclic diol and a polyalkylene glycol as raw materials.

As long as the polymer contains polyalkylene glycol units, each block may be a homopolymer or a copolymer.

The alicyclic polyester unit preferably contains a hard segment obtained from a cyclohexanedicarboxylic acid and a cyclohexanedimethanol as raw materials.

The polyalkylene glycol unit of the alicyclic polyester-polyalkylene glycol block copolymer preferably contains a soft segment (polytetramethylene glycol unit) obtained from a polytetramethylene ether glycol as a raw material.

Examples of the cyclic polyester-chain aliphatic polyester block copolymer include a block copolymer having a hard segment made of an aromatic polyester and a soft segment made of a chain aliphatic polyester (hereinafter sometimes referred to as "aromatic polyester-chain aliphatic polyester block copolymer"), and a block copolymer having a hard segment made of an alicyclic polyester and a soft segment made of a chain aliphatic polyester (hereinafter sometimes referred to as "alicyclic polyester-chain aliphatic polyester block copolymer").

Among these, the aromatic polyester-chain aliphatic polyester block copolymers are preferred. Among the aromatic polyester-chain aliphatic polyester block copolymers, polybutylene terephthalate-chain aliphatic polyester block copolymers in which the aromatic polyester unit is composed of polybutylene terephthalate are more preferred. Preferred chain aliphatic polyester units are those obtained from a chain aliphatic dicarboxylic acid having 4 to 10 carbon atoms, typified by sebacic acid and adipic acid, and a chain aliphatic diol.

As the flexible soft segment, polyalkylene ether glycol is preferred. Examples of the polyalkylene ether glycol include linear and branched aliphatic ethers such as polymethylene glycol, polyethylene glycol, poly(1,2- and 1,3-) propylene glycol, polytetramethylene glycol, polyhexamethylene glycol, and the like. Other examples include homopolymers or copolymers of alicyclic ethers such as condensation products of cyclohexanediol and condensation products of cyclohexanedimethanol.

The soft segment may be a random copolymer within these ether units. A block copolymer having a polyalkylene glycol unit can also be used for the soft segment.

These may be used alone or in combination of two or more.

The number average molecular weight of the polyalkylene glycol contained in the cyclic polyester-polyalkylene glycol block copolymer is preferably 600 to 4,000, more preferably 800 to 2,500, and even more preferably 900 to 2,100.

Here, the number average molecular weight of polyalkylene glycol refers to a value calculated by magnetic resonance spectroscopy (NMR).

The cyclic polyester-polyalkylene glycol block copolymer may contain only one type of these polyalkylene glycols, or may contain two or more types having different number average molecular weights or constituent components.

There is no particular restriction on the method for producing the polyester elastomer, and either a batch polymerization method or a continuous polymerization method may be used. For example, among cyclic polyester-polyalkylene glycol block copolymers, an aromatic polyester-polyalkylene glycol block copolymer using an aromatic polyester and a polyalkylene ether glycol can be obtained by polycondensing an oligomer obtained by an esterification reaction or a transesterification reaction using a chain aliphatic and/or alicyclic diol having 2 to 12 carbon atoms, an aromatic dicarboxylic acid or its alkyl ester and a polyalkylene ether glycol as a raw material .

As the chain aliphatic and/or alicyclic diol having 2 to 12 carbon atoms, those commonly used as raw materials for polyester can be used.

Examples of the chain aliphatic diol include ethylene glycol, propylene glycol, trimethylene glycol, 1,3-butylene glycol, 1,4-butylene glycol, and 1,6-hexene glycol. Among these, 1,4-butylene glycol is preferred.

Examples of the alicyclic diol include 1,4-cyclohexene glycol and 1,4-cyclohexanedimethanol. Among these, 1,4-cyclohexanedimethanol is preferred.

These chain aliphatic and/or alicyclic diols having 2 to 12 carbon atoms may be used alone or in combination of two or more.

As the aromatic dicarboxylic acid or its alkyl ester, those commonly used as raw materials for polyester can be used. Examples include terephthalic acid and its lower (in this specification, "lower" means 4 or less of carbon atoms) alkyl esters, isophthalic acid, phthalic acid, 2,5-norbornenedicarboxylic acid, 1,4-naphthalenedicarboxylic acid , 1,5-naphthalene dicarboxylic acid, 2,6-naphthalene dicarboxylic acid and lower alkyl esters thereof. Among these, terephthalic acid and isophthalic acid are preferred, and terephthalic acid is more preferred.

One type of these aromatic dicarboxylic acids or alkyl esters thereof may be used alone, or two or more types may be used in combination.

As mentioned above, examples of the polyalkylene ether glycol include linear and branched aliphatic ether glycols such as polymethylene glycol, polyethylene glycol, poly(1,2-and 1,3-)propylene glycol, polytetramethylene glycol, polyhexamethylene glycol, and the like. In addition to the aliphatic ether glycols, examples thereof include homopolymers or copolymers of alicyclic ethers such as a condensate of cyclohexanediol, a condensate of cyclohexanedimethanol, and the like.

Additionally, a random copolymer within these ether units may be used.

Among these, preferred are linear and branched aliphatic ether glycols such as polymethylene glycol, polyethylene glycol, poly(1,2- and 1,3-)propylene glycol, polytetramethylene glycol, polyhexamethylene glycol, and the like. More preferred are polymethylene glycol, polyethylene glycol, poly(1,2- and 1,3-)propylene glycol and polytetramethylene glycol, and even more preferred is polytetramethylene glycol.

These may be used alone or in combination of two or more.

When producing an alicyclic polyester-polyalkylene glycol block copolymer, instead of the aromatic dicarboxylic acid or its alkyl ester used as a raw material when producing the above-mentioned aromatic polyester-polyalkylene glycol block copolymer, an alicyclic dicarboxylic acid or its alkyl ester may be used.

The alicyclic polyester-polyalkylene glycol block copolymer can be obtained by polycondensing an oligomer obtained by an esterification reaction or a transesterification reaction using a chain aliphatic and/or alicyclic diol having 2 to 12 carbon atoms, an alicyclic dicarboxylic acid or its alkyl ester, and a polyalkylene ether glycol as a raw material.

As the alicyclic dicarboxylic acid or its alkyl ester, those commonly used as raw materials for polyester can be used. Examples include cyclohexanedicarboxylic acid and its lower alkyl esters, and cyclopentanedicarboxylic acid and its lower alkyl esters. Among these, cyclohexanedicarboxylic acid and its lower alkyl esters are preferred, and cyclohexanedicarboxylic acid is more preferred.

One type of these alicyclic dicarboxylic acids or alkyl esters thereof may be used alone, or two or more types may be used in combination.

The respective contents of the cyclic polyester unit and polyalkylene glycol unit in the cyclic polyester-polyalkylene glycol block copolymer are not limited, but are usually within the following range from the balance between the crystallinity of the hard segment and the flexibility of the soft segment.

The lower limit of the content of the cyclic polyester unit in the cyclic polyester-polyalkylene glycol block copolymer is not limited, but is usually 10% by mass or more, and preferably 15% by mass or more. The upper limit of the content of the cyclic polyester unit is not limited, but is usually 95% by mass or less, preferably 90% by mass or less, and more preferably 80% by mass or less.

The lower limit of the content of the polyalkylene glycol unit in the cyclic polyester-polyalkylene glycol block copolymer is not limited, but is usually 5% by mass or more, preferably 10% by mass or more, and more preferably 20% by mass or more. The upper limit of the content of the polyalkylene glycol units is not limited, but is usually 90% by mass or less, and preferably 85% by mass or less.

The content of the cyclic polyester unit in the block copolymer having a cyclic polyester unit can be calculated based on the chemical shift of its hydrogen atoms and its content using nuclear magnetic resonance spectroscopy (NMR). Similarly, the content of the polyalkylene glycol unit in the block copolymer having a polyalkylene glycol unit can be calculated based on the chemical shift of its hydrogen atoms and its content using nuclear magnetic resonance spectroscopy (NMR).

As the aromatic polyester-polyalkylene glycol block copolymer, polybutylene terephthalate-polyalkylene glycol block copolymer is preferred because it has a particularly fast crystallization rate and excellent moldability. A number of carbon atoms of the alkylene group of the polyalkylene glycol unit is preferably 2 to 12, more preferably 2 to 8, even more preferably 2 to 5, and particularly preferably 4.

In addition to the above components, the cyclic polyester-polyalkylene glycol block copolymer according to the present invention, typified by the aromatic polyester-polyalkylene glycol block copolymer, may be copolymerized with a small amount of one or more trifunctional alcohols, and tricarboxylic acids and/or esters thereof. Furthermore, a chain aliphatic dicarboxylic acid such as adipic acid or its dialkyl ester may be introduced as a copolymerization component.

The above cyclic polyester-polyalkylene glycol block copolymer is also available as a commercial product.

Commercially available products include, specifically, "KEYFLEX (registered trademark)" manufactured by LG Chemical Corporation, "TEFABLOC (registered trademark)" manufactured by Mitsubishi Chemical Corporation, "Pelprene (registered trademark)" manufactured by Toyobo Co., Ltd., "Hytrel (registered trademark)" manufactured by DuPont, and "Hetroflex (registered trademark)" manufactured by Hetron.

[Component (C): Isoalkane mixture]

The thermoplastic elastomer composition of the present invention contains an isoalkane mixture as the component (C).

Isoalkane means an alkane having an isomethyl group at the terminal, and does not include a double bond or a cyclic substituent.

"Isoalkane mixture" means a mixture of an isoalkane and a hydrocarbon that does not have an isoalkane structure.

The "isoalkane" according to the present invention may be any alkane having an isomethyl group at the terminal. It may be an isoalkane that has no side chain other than the terminal isomethyl group, or it may have an alkyl group (In the present invention, this alkyl group is referred to as a "side chain alkyl group".) as a side chain other than the terminal isomethyl group in the main chain of the alkane. As mentioned above, from the viewpoint of the entanglement effect between the elastomer (B) and the isoalkane, isoalkanes having a side chain alkyl group are preferred.

Since many isoalkanes are generally commercially available as isoalkane mixtures, the component (C) is referred to as "isoalkane mixture" in the present invention, but the component (C) may be a single isoalkane substance.

Examples of the side chain alkyl group contained in the isoalkane mixture of the component (C) include alkyl groups such as methyl group, ethyl group, propyl group, butyl group, pentyl group, hexyl group, heptyl group, octyl group, and the like. Among these, an alkyl group having 1 to 18 carbon atoms is more preferred, an alkyl group having 1 to 3 carbon atoms is even more preferred, and a methyl group is particularly preferred.

The side chain alkyl group of the isoalkane is an alkyl chain branching from the main chain which is the longest linear alkyl chain. The number of side chain alkyl groups in one molecule is not limited to one but two or more. The number of side chain alkyl groups contained the isoalkane is preferably 2 to 16, more preferably 4 to 12, and even more preferably 4 to 8.

The isoalkane mixture of the component (C) preferably has the side chain alkyl group in the molecule at a content of 1 to 80%. The content of the side chain alkyl group is more preferably 5 to 70%, even more preferably 10 to 60%, and particularly preferably 15 to 50%. The content of the side chain alkyl group is preferably higher from the viewpoints of bleed-out resistance and rubber elasticity, and lower from the viewpoint of moldability.

Here, the content of the side chain alkyl group is the ratio (percentage) of the molecular weight of the side chain alkyl group (the total molecular weight when there are multiple side chain alkyl groups) to the molecular weight of the entire isoalkane.

In the first embodiment, by including the isoalkane mixture (C) having a kinematic viscosity at 40°C of 20 cSt or more and 8,000 cSt or less, the obtained thermoplastic elastomer composition is softened and the softness and rubber elasticity are increased, and the processability, fluidity, and bleed-out resistance of the obtained thermoplastic elastomer composition can be improved.

The kinematic viscosity at 40°C of the isoalkane mixture of the component (C) is preferably 20 centistokes (cSt) or more, and more preferably 25 cSt or more, from the viewpoints of bleed-out resistance and rubber elasticity. On the other hand, the kinematic viscosity at 40°C of the isoalkane mixture of the component (C) is preferably 8000 cSt or less, more preferably 3000 cSt or less, and even more preferably 1000 cSt or less, from the viewpoints of processability and moldability.

Here, the kinematic viscosity is the kinematic viscosity at 40°C measured by a method in accordance with JIS K2283.

From the viewpoint of safety during processing, the flash point (COC method) of the isoalkane mixture of the component (C) is preferably higher than the melting point of the thermoplastic resin (A) used or equal to or higher than the processing temperature. The flash point of the isoalkane mixture is preferably 150°C or higher, more preferably 180°C or higher, even more preferably 200°C or higher, and particularly preferably 250°C or higher.

The pour point (measured by ASTM D97) of the isoalkane mixture of the component (C) is preferably -60°C or higher, more preferably -50°C or higher, and even more preferably - 40°C or higher, because the lower the pour point, the higher the molecular mobility and the poorer the bleed-out resistance accordingly. On the other hand, from the viewpoint of handling properties during processing, the pour point is preferably 0°C or lower, more preferably -10°C or lower, even more preferably -20°C or lower, and particularly preferably -25°C or lower.

The molecular weight dispersity index (PDI) of the isoalkane mixture of the component (C) is preferably 1.30 or less, more preferably 1.2 or less, and even more preferably 1.1 or less, from the viewpoint of bleed-out resistance.

From the viewpoints of bleed-out resistance and rubber elasticity, the weight average molecular weight of the isoalkane mixture of the component (C) is preferably 200 or more, more preferably 300 or more, and even more preferably 350 or more as a polystyrene equivalent value measured by GPC. On the other hand, from the viewpoints of processability and moldability, it is preferably 5,000 or less, more preferably 3,000 or less, and even more preferably 1,500 or less.

Here, the molecular weight dispersity index and weight average molecular weight can be measured by gel permeation chromatography (hereinafter sometimes abbreviated as GPC).

The isoalkane mixture of the component (C) has a naphthenic carbon content (%CN) determined by ring analysis of usually 20% or less, preferably 150 or less, more preferably 10% or less, and even more preferably 5%.

Furthermore, the isoalkane mixture of the component (C) has an aromatic carbon content (%CA) determined by ring analysis of preferably 5% or less, and more preferably 1% or less.

Here, the above ring analysis can be specifically performed by the n-d-M method specified in ASTM D2140 or ASTM D3238.

By setting the naphthenic carbon content and the aromatic carbon content within the above ranges, it becomes excellent in heat resistance and light discoloration resistance.

In the second embodiment, by including the isoalkane mixture (C) whose main structural unit identified from a mass spectrum obtained by measurement by FD-MS is represented by at least one of the molecular formulas $C_{16}H_{34}$ and $C_{16}H_{32}$, the obtained thermoplastic elastomer composition is softened and the softness and rubber elasticity are increased, and the processability, fluidity, and bleed-out resistance of the obtained thermoplastic elastomer composition can be improved.

The main structural units mentioned here are defined as follows.

In the mass spectrum measured by FD-MS, the molecular formula of the hydrocarbon expressed by the m/z value of the peak is specified based on the atomic weight of carbon: 12 and the atomic weight of hydrogen: 1.00794. For example, the value of m/z is 16.0 for $CH_4$, 420.5 for $C_{30}H_{60}$, and 841.0 for $C_{60}H_{120}$.

In the mass spectrum measured by FD-MS, from the viewpoint of extracting peaks representing the molecules themselves, peaks having an even number in one place of m/z are extracted for hydrocarbons having 2 to 118 hydrogen atoms. For hydrocarbons having 120 to 244 hydrogen atoms, peaks having an odd number in one place of m/z are extracted, and for hydrocarbons having 246 to 370 hydrogen atoms, peaks having an even number in one place of m/z are extracted. A plurality of peaks having strong peak intensities are sequentially extracted from among the peaks thus extracted. The molecular formula of the hydrocarbon that can be identified from the m/z difference expressed by the extracted peaks is called the main structural unit. Peaks having the same number of carbon atoms are not included in the calculation of the main structural units.

In the following specific example, in order to confirm the main structural units, six peaks with strong peak intensities were extracted and listed in ascending order of m/z. However, the number of extractions is not limited to this method, as long as the main constituent units are found.

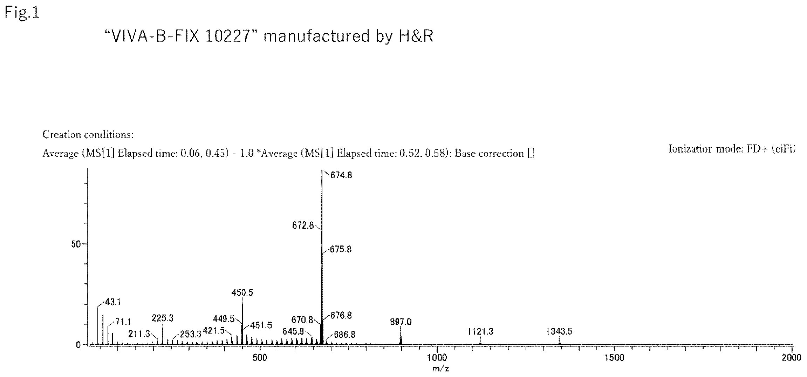

In Figure 1, peaks of m/z (molecular formula) = 450.5 ($C_{32}H_{66}$), 672.8 ($C_{48}H_{96}$), 674.8 ($C_{48}H_{98}$), 897.0 ($C_{64}H_{128}$), 1121.3 ($C_{64}H_{128}$), 1345.5 ($C_{96}H_{192}$) can be extracted, and the main structural units can be represented by the molecular formulas $C_{16}H_{34}$ and $C_{16}H_{32}$.

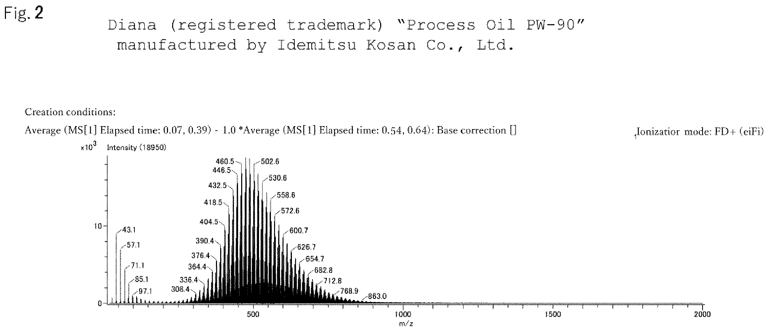

In Figure 2, peaks of m/z = 460.5 ($C_{33}H_{64}$), 462.5 ($C_{33}H_{66}$), 474.5 ($C_{34}H_{66}$), 476.6 ($C_{34}H_{68}$), 488.6 ($C_{35}H_{68}$), 490.6 ($C_{35}H_{70}$) can be extracted and the main structural unit can be represented by the molecular formula $CH_2$.

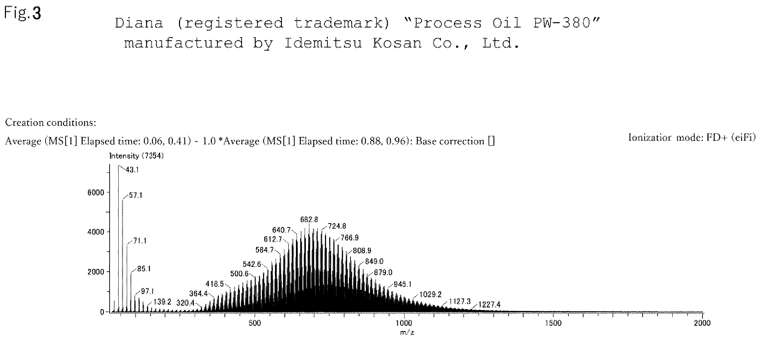

In Figure 3, peaks of m/z = 654.7 ($C_{47}H_{90}$), 668.8 ($C_{48}H_{92}$), 682.8 ($C_{49}H_{94}$), 694.8 ($C_{50}H_{94}$), 696.8 ($C_{50}H_{96}$), 708.8 ($C_{51}H_{96}$) can be extracted and the main structural unit can be represented by the molecular formula $CH_2$.

In the second embodiment, it is desirable that the isoalkane mixture (C) contains as a main component at least one of the compounds represented by the molecular formulas $C_{48}H_{96}$ and $C_{48}H_{98}$ in the mass spectrum measured by FD-MS. The term "main component" as used herein refers to the strongest peak extracted from the peak representing the molecule itself in the mass spectrum measured by FD-MS. In FIG. 1, the peak of m/z=674.8 ($C_{48}H_{98}$) corresponds. In FIG. 2, the peak of m/z=460.5 ($C_{33}H_{64}$) corresponds, and in FIG. 3, the peak of m/z=682.8 ($C_{49}H_{94}$) corresponds.

In the third embodiment, by including the isoalkane mixture (C) containing as a main component at least one of the compounds represented by the molecular formulas $C_nH_{2n}+_2$ and $C_nH_{2n}$ ($40 \leqq n < 60$) identified from a mass spectrum obtained by measurement by FD-MS, the obtained thermoplastic elastomer composition is softened and the softness and rubber elasticity are increased, and the processability, fluidity, and bleed-out resistance of the obtained thermoplastic elastomer composition can be improved.

In this case, it is preferable to further contain at least one of the compounds represented by the molecular formulas $C_nH_{2n}+_2$ and $C_nH_{2n}$ ($30 \leqq n < 40$), and it is more preferable to contain at least one of the compounds represented by the molecular formulas $C_nH_{2n}+_2$ and $C_nH_{2n}$ ($60 \leqq n \leqq 80$). It is particularly preferable to contain at least one of the compounds represented by the molecular formulas $C_nH_{2n}+_2$ and $C_nH_{2n}$ ($30 \leqq n < 40$) and at least one of the compounds represented by the molecular formulas $C_nH_{2n}+_2$ and $C_nH_{2n}$ ($60 \leqq n \leqq 80$).

The isoalkane mixture (C) may contain a biomass-derived raw material.

The biomass degree of the isoalkane mixture (C) is calculated according to ASTM D 6866 based on the 14C content. From the viewpoint of reducing environmental load, the biomass degree of the isoalkane mixture (C) is preferably 40% or more, more preferably 50% or more, and particularly preferably 60% or more. The upper limit of the biomass degree of the isoalkane mixture (C) is not particularly limited, and is 100% or less.

The isoalkane mixture of the component (C) can also be used in combination with a general hydrocarbon-based softening agent for rubber. Here, the general hydrocarbon-based softening agent for rubber refers to a hydrocarbon-based softening agent for rubber other than the component (C) .

Typical hydrocarbon-based softening agent for rubber includes a mineral-oil-based softening agent, a syntheticresin-based softening agent, and the like. A mineral-oil-based softening agent is particularly preferable. Typically, mineral-oil-based softening agents are mixtures of an aromatic hydrocarbon, a naphthenic hydrocarbon, and a paraffinic hydrocarbon. Oils in which 50% or more of all the carbon atoms are carbon atoms derived from a paraffinic hydrocarbon are referred to as paraffinic oils. Oils in which 30 to 45% of all the carbon atoms are carbon atoms derived from a naphthenic hydrocarbon are referred to as naphthenic oils. Oils in which 35% or more of all the carbon atoms are carbon atoms derived from an aromatic hydrocarbon are referred to as aromatic oils. Among these, paraffinic oils are preferable.

The kinematic viscosity at 40°C of the hydrocarbon-based softening agent for rubber is preferably 20 centistokes (cSt) or more, and more preferably 50 cSt or more. On the other hand, it is preferably 800 cSt or less, and more preferably 600 cSt or less. Further, the flash point (COC method) of the hydrocarbon-based softening agent for rubber is preferably 200°C or higher, and more preferably 250°C or higher.

Commercially available hydrocarbon-based softening agents for rubber may be used. Examples of commercially available product include "Nisseki Polybutene (registered trademark) HV" series manufactured by ENEOS Corporation, "Diana (registered trademark) process oil PW" series manufactured by Idemitsu Kosan Co., Ltd., and the like. It is possible to appropriately select and use one of these.

Hydrocarbon-based softening agent for rubber can be used alone or in any combination and ratio of two or more.

[Content ratio]

In the thermoplastic elastomer composition of the present invention, the lower limit of the content of the component (A) is preferably 3% by mass or more based on 100% by mass of a total of the components (A) to (C), from the viewpoints of stable moldability, heat resistance, and other mechanical properties. It is more preferably 5% by mass or more, even more preferably 7% by mass or more, and particularly preferably 10% by mass or more. On the other hand, from the viewpoints of stable rubber elasticity and good moldability, the upper limit of the content of the component (A) is preferably 95% by mass or less, more preferably 90% by mass or less, even more preferably 85% by mass or less, and particularly preferably 80% by mass or less.

In the thermoplastic elastomer composition of the present invention, the lower limit of the content of the component (B) is preferably 3% by mass or more based on 100% by mass of a total of the components (A) to (C), from the viewpoints of stable rubber elasticity and good moldability. It is more preferably 5% by mass or more, even more preferably 10% by mass or more, and particularly preferably 15% by mass or more. On the other hand, from the viewpoints of stable processability, moldability, heat resistance, and other mechanical properties, the upper limit of the content of the component (B) is preferably 90% by mass or less, more preferably 80% by mass or less, even more preferably 70% by mass or less, and particularly preferably 60% by mass or less.

In the thermoplastic elastomer composition of the present invention, the lower limit of the content of the component (C) is preferably 10 parts by mass or more based on 100 parts by mass of the component (B), from the viewpoints of stable rubber elasticity and good moldability. It is more preferably 20 parts by mass or more, even more preferably 30 parts by mass or more, and particularly preferably 40 parts by mass or more. On the other hand, from the viewpoints of handling properties and bleed-out resistance during production, the upper limit of the content of the component (C) is preferably 400 parts by mass or less, more preferably 350 parts by mass or less, even more preferably 300 parts by mass or less, and particularly preferably 200 parts by mass or less, based on 100 parts by mass of the component (B).

When the thermoplastic elastomer composition of the present invention contains the above-mentioned hydrocarbon-based softening agent for rubber together with the component (C), from the viewpoints of weight lightening, stable rubber elasticity, and good moldability, the content of the hydrocarbon-based softening agent for rubber is preferably 300 parts by mass or less, and more preferably 200 parts by mass or less, based on 100 parts by mass of the component (B). Further, it is preferable that the hydrocarbon-based softening agent for rubber is used such that the total content of the component (C) and the hydrocarbon-based softening agent for rubber falls within the above content range of the component (C).

In this case, the content of the component (C) relative to a total amount of the component (C) and the hydrocarbon-based softening agent for rubber such as paraffin oil is preferably 1% by mass or more, more preferably 5% by mass or more, and even more preferably 10% by mass or more. When the content of the component (C) relative to a total amount of the component (C) and the hydrocarbon-based softening agent for rubber such as paraffin oil is equal to or higher than the above lower limit, it is possible to effectively obtain the effect of improving moldability, bleed-out resistance and rubber elasticity due to the use of the component (C). On the other hand, the content of the component (C) relative to a total amount of the component (C) and the hydrocarbon-based softening agent for rubber such as paraffin oil is preferably 99% by mass or less, more preferably 90% by mass or less, and even more preferably 80% by mass or less. When the content of the component (C) relative to a total amount of the component (C) and the hydrocarbon-based softening agent for rubber such as paraffin oil is equal to or lower the above upper limit, it is possible to effectively obtain the effect of improving weight lightening, rubber elasticity, and moldability due to the use of the hydrocarbon-based softening agent for rubber together with the component (C).

[Other ingredients]

In addition to the above-mentioned components (A) to (C), other components may be added to the thermoplastic elastomer composition of the present invention, depending on the purpose, as long as the effects of the present invention are not impaired.

Other ingredients include, for example, various additives such as fillers, antioxidants, heat stabilizers, light stabilizers, ultraviolet absorbers, neutralizers, lubricants, antifogging agents, antiblocking agents, slip agents, dispersants, colorants, flame retardants, crosslinking agents, crosslinking aids, antistatic agents, conductivity imparting agents, metal deactivators, molecular weight regulators, antibacterial agents, antifungal agents, optical brighteners, and the like. Any of these can be used alone or in combination.

Examples of the filler include glass fiber, hollow glass bulb, carbon fiber, alumina, talc, calcium carbonate, clay, mica, potassium titanate fiber, silica, zeolite, metal soap, calcium carbonate, titanium dioxide, carbon black, boron nitride, cellulose, and the like.

These fillers may be used alone or in any combination and ratio of two or more.

As the heat stabilizer (also called antioxidant, hereinafter sometimes referred to as "component (D)"), phosphorus compounds such as aliphatic, aromatic, or alkyl group-substituted aromatic esters of phosphoric acid and phosphorous acid, hypophosphorous acid derivatives, phenylphosphonic acid, phenylphosphinic acid, diphenylphosphonic acid, polyphosphonate, dialkylpentaerythritol diphosphite, dialkylbisphenol A diphosphate, and the like; phenol derivatives, especially hindered phenol compounds; sulfur-containing compounds such as thioether type, dithio acid salt type, mercaptobenzimidazole type, thiocarbanilide type, thiodipropionic acid ester type, and the like; tin-based compounds such as tin maleate, dibutyltin monoxide, and the like can be used.

Examples of the hindered phenol compound include "Irganox (registered trademark) 1010" and "Irganox (registered trademark) 1520" (both trade names: manufactured by BASF Japan Ltd.), and the like.

Examples of phosphorus compound include "PEP-36", "PEP-24G", "HP-10" (all product names: manufactured by ADEKA Corporation), "Irgafos (registered trademark) 168" (product name: manufactured by BASF Japan Ltd.), and the like.

Examples of the sulfur-containing compound include thioether compounds such as dilaurylthiopropionate (DLTP), distearylthiopropionate (DSTP), and the like.

The lower limit of the amount of the heat stabilizer to be added is preferably 0.01 part by mass and more preferably 0.05 parts by mass, and the upper limit is preferably 1 part by mass and more preferably 0.5 parts by mass as a mass proportion in 100 parts by mass of the thermoplastic elastomer composition. By setting the amount of the heat stabilizer to be added at equal to or higher than the above lower limit, an addition effect can be sufficiently obtained. By setting the amount of the heat stabilizer to be added at equal to or lower than the above upper limit, the precipitation of the heat stabilizer can be suppressed.

Examples of the light stabilizer include benzotriazole compounds, benzophenone compounds, and the like. Specifically, "TINUVIN622LD", "TINUVIN765" (both product names: manufactured by BASF Japan Ltd.), and "SANOLLS-2626", "SANOLLS-765" (both product names: manufactured by Sankyo Co., Ltd.) can be used.

Examples of the ultraviolet absorber include "TINUVIN328", "TINUVIN234" (both trade names: manufactured by BASF Japan Ltd.), and the like.

The lower limit of the amount of the light stabilizer and the ultraviolet absorber to be added is, respectively, preferably 0.01 parts by mass and more preferably 0.05 parts by mass, and the upper limit is preferably 1 part by mass and more preferably 0.5 part by mass, as a mass proportion in 100 parts by mass of the thermoplastic elastomer composition. By setting the amount of the light stabilizer and the ultraviolet absorber to be added at equal to or higher than the above lower limit, an addition effect can be sufficiently obtained. By setting the amount of the light stabilizer and the ultraviolet absorber to be added at equal to or lower than the above upper limit, the precipitation of the light stabilizer and the ultraviolet absorber can be suppressed.

Examples of the coloring agent include dyes such as direct dyes, acid dyes, basic dyes, metal complex dyes, and the like; inorganic pigments such as carbon black, titanium oxide, zinc oxide, iron oxide, mica, and the like; organic pigments such as coupled azo-based, condensed azo-based, anthraquinone, thioindigo type, dioxazone type, and phthalocyanine type pigments; and the like.

Examples of flame retardant include additive and reactive flame retardants such as organic compounds containing phosphorus and halogen, organic compounds containing bromine or chlorine, ammonium polyphosphate, aluminum hydroxide, antimony oxide, and the like.

Examples of the crosslinking agent (hereinafter sometimes referred to as "component (E)") include organic peroxides, phenol resins, crosslinking agents other than these, and the like.

Examples of organic peroxide include dialkyl peroxides such as di-t-butyl peroxide, t-butylcumyl peroxide, dicumyl peroxide, 2,5-dimethyl-2,5-di(t-butylperoxy)hexane, 2 ,5-dimethyl-2,5-di(t-butylperoxy)hexyne-3,1,3-bis(t-butylperoxyisopropyl)benzene,1,1-di(t-butylperoxy)-3,3,5-trimethylcyclohexane, and the like; peroxy esters such as t-butylperoxybenzoate, t-butylperoxy-2-ethylhexanoate, t-butylperoxyisopropyl carbonate, 2,5-dimethyl-2,5-di(benzoylperoxy) hexane, 2,5-dimethyl-2,5-di(benzoylperoxy)hexyne-3, and the like; hydroperoxides such as acetyl peroxide, lauroyl peroxide, benzoyl peroxide, p-chlorobenzoyl peroxide, 2,4-dichlorobenzoyl peroxide, and the like; diacyl peroxides such as di-3,5,5-trimethylhexanoyl peroxide, octanoyl peroxide, dibenzoyl peroxide, and the like; ketone peroxides such as methyl ethyl ketone peroxide, cyclohexanone peroxide, and the like.

For example, phenolic resin crosslinkers are usually used in conjunction with activators. Activators that can be used here include, for example, halogen donors such as stannous chloride, ferric chloride, chlorinated paraffin, chlorinated polyethylene, chlorosulfonated polyethylene, and the like, and acid acceptors such as iron oxide, titanium oxide, magnesium oxide, silicon dioxide, zinc oxide, and the like. When the phenolic resin is halogenated, a halogen donor may not be used.

Examples of crosslinking aid (hereinafter sometimes referred to as "component (F)") include auxiliary agents for peroxide such as sulfur, p-quinonedioxime, p-dinitrosobenzene, 1,3-diphenylguanidine, and the like; crosslinking auxiliary agents for phenolic resin such as stannous chloride anhydride, stannous chloride dihydrate, ferric chloride, and the like; polyfunctional vinyl compounds such as divinylbenzene, triallyl cyanurate, triallyl isocyanurate, diallyl phthalate, and the like; polyfunctional (meth) acrylate compounds such as ethylene glycol di(meth)acrylate, diethylene glycol di(meth) acrylate, polyethylene glycol di(meth)acrylate, trimethylolpropane tri(meth)acrylate, allyl(meth)acrylate, and the like.

When the thermoplastic elastomer composition of the present invention contains a crosslinking agent as the component (E), the content of the component (E) is preferably 0.01 part by mass or more, more preferably 0.05 part by mass or more, and even more preferably 0.1 parts by mass or more, based on a total of 100 parts by mass of the components (A) to (C) or, when a hydrocarbon-based softening agent for rubber is included, based on a total 100 parts by mass of the components (A) to (C) and the hydrocarbon-based softening agent for rubber, in order to allow the crosslinking reaction to proceed sufficiently. On the other hand, from the viewpoint of controlling the crosslinking reaction, this component is preferably 10 parts by mass or less, more preferably 8 parts by mass or less, and even more preferably 5 parts by mass or less.

The amount of the crosslinking aid used as the component (F) is usually preferably 0.05 to 3 parts by mass, and particularly preferably 0.1 to 2 parts by mass, based on a total of 100 parts by mass of the components (A) to (C) or, when a hydrocarbon-based softening agent for rubber is included, based on a total 100 parts by mass of the components (A) to (C) and the hydrocarbon-based softening agent for rubber. When the amount of the crosslinking aid used equal to or higher than at least the above lower limit, the effect of using the crosslinking aid can be obtained. It is preferable in terms of cost that the amount of the crosslinking aid used is equal to or lower than the above upper limit.

The above additives may be used alone or in any combination and ratio of two or more.

[Method for producing thermoplastic elastomer composition]

The method for producing the thermoplastic elastomer composition of the present invention is not particularly limited. For example, the thermoplastic elastomer composition of the present invention can be produced by dryblending together the components (A) to (C), and the component (D) and other components that are optionally added and subsequently melt-kneading the blend.

In this instance, mixing apparatuses that may be used are not particularly limited, and examples thereof include kneading apparatuses, such as Banbury mixers, Labo Plastomills, single-screw extruders, and twin-screw extruders. Among these, producing by a melt-kneading method using an extruder is preferable from the viewpoint of productivity and good kneading properties.

A melting temperature for the kneading may be appropriately set. The melting temperature is typically within a range of 130 to 300°C and preferably within a range of 150 to 250°C.

As the thermoplastic elastomer composition of the present invention, those obtained by crosslinking by dynamic heat treatment of the components (A) to (C), and the component (D) and other components that are optionally added in a predetermined content ratio, in the presence of the component (E): crosslinking agent and the component (F): crosslinking aid, are also preferred.

In the present invention, "dynamic heat treatment" means kneading in a molten or semi-molten state. This dynamic heat treatment is preferably carried out by melt-kneading. Examples of mixing and kneading apparatus used for this purpose include a closed Banbury mixer, a mixing roll, a kneader, and a twin-screw extruder. Among these, it is preferable to use a twin-screw extruder. A preferred embodiment of the producing method using this twin-screw extruder is one in which dynamic heat treatment is performed by supplying each component to a raw material supply port (hopper) of a twin-screw extruder having a plurality of raw material supply ports.

The temperature during dynamic heat treatment is usually 80 to 300°C, preferably 100 to 250°C. Further, the time for performing the dynamic heat treatment is usually 0.1 to 30 minutes.

When the thermoplastic elastomer composition of the present invention is subjected to dynamic heat treatment using a twin-screw extruder, it is preferable to carry out extrusion while maintaining the relationship of the following formula (1) between the barrel radius R (mm), the screw rotation speed N (rpm), and the discharge rate Q (kg/hour) of the twin-screw extruder, and it is more preferable to carry out extrusion while maintaining the relationship of the following formula (2).

$$2.6 < NQ/R3 < 22.6 \qquad (1)$$

$$3.0 < NQ/R3 < 20.0 \qquad (2)$$

It is preferable that the relationship between the barrel radius R (mm), the screw rotation speed N (rpm), and the discharge rate Q (kg/hour) of the twin-screw extruder is larger than the above lower limit value in order to efficiently produce the thermoplastic elastomer composition. On the other hand, it is preferable that the above relationship is smaller than the above upper limit value because heat generation due to shearing is suppressed and foreign matter that causes poor appearance is less likely to be generated.

[Physical properties of thermoplastic elastomer composition]

When the thermoplastic elastomer composition of the present invention is used for injection molding, the melt flow rate (MFR) of the thermoplastic elastomer composition of the present invention, as measured under the conditions of a measurement temperature of 230°C and a measurement load of 21.18N using a melt indexer (manufactured by Toyo Seiki Seisaku-sho, Ltd.) in accordance with ISO1133, is preferably 2 g/10 minutes or more, more preferably 5 g/10 minutes or more, and even more preferably 10 g/10 minutes or more from the viewpoint of fluidity. In addition, from the viewpoint of preventing burrs, the melt flow rate (MFR) is preferably 200 g/10 minutes or less, more preferably 185 g/10 minutes or less, and even more preferably 160 g/10 minutes or less.

When the thermoplastic elastomer composition of the present invention is used for melt extrusion molding, the melt flow rate (MFR) of the thermoplastic elastomer composition of the present invention, as measured under the conditions of a measurement temperature of 230°C and a measurement load of 49N using a melt indexer (manufactured by Toyo Seiki Seisaku-sho, Ltd.) in accordance with ISO1133, is preferably 0.1 g/10 minutes or more, more preferably 0.5 g/10 minutes or more, and even more preferably 1 g/10 minutes or more from the viewpoint of fluidity. In addition, from the viewpoint of formability, the melt flow rate (MFR) is preferably 40 g/10 minutes or less, more preferably 35 g/10 minutes or less, and even more preferably 30 g/10 minutes or less.

From the viewpoint of flexibility, a lower limit of hardness Duro A of the thermoplastic elastomer composition of the present invention, which is a value measured 15 seconds after pressing a needle against a test piece in accordance with ISO 7619, is preferably 10 or more, more preferably 20 or more even, even more preferably 30 or more, and particularly preferably 40 or more. On the other hand, the upper limit of hardness Duro A is preferably 95 or less, and more preferably 90 or less.

From the viewpoint of reducing environmental load, the thermoplastic elastomer composition of the present invention preferably has a biomass degree of 1% or more, more preferably 10% or more, even more preferably 15% or more, and particularly preferably 20% or more, according to ASTM D 6866-22. On the other hand, the upper limit of the biomass degree is 100% or less.

In order to make the biomass degree of the thermoplastic elastomer composition within the above numerical range, biomass-derived raw materials may be appropriately selected and blended as raw materials for the component (A), the component (B), the component (C), and the like .

[Molded article]

The molded article of the present invention can be obtained by molding the thermoplastic elastomer composition of the present invention.

The thermoplastic elastomer composition of the present invention can be made into a molded article by various molding methods commonly used, such as injection molding, extrusion molding, blow molding, compression molding, and vacuum molding. Among these, molded articles obtained by injection molding and extrusion molding are preferred. Moreover, after performing these moldings, the molded article may be subjected to secondary processing such as lamination molding or thermoforming.

[Uses]

There are no particular limitations on the uses of the thermoplastic resin composition of the present invention and its molded article. The thermoplastic resin composition of the present invention and its molded article can be used in a wide range of fields such as civil engineering and construction parts (waterstop materials, joint materials, window frames), sporting goods, industrial parts (multilayer hose tubes), home appliance parts (multilayer hoses), medical components (medical multilayer containers, syringe gaskets, rubber stoppers), food components (multilayer packaging films, containers, bottles, design packagings, labels, cap liners, packings), electric wire covering materials, miscellaneous goods, and automobile parts (weather strips, ceiling materials, interior sheets, bumper moldings, side moldings, air spoilers, hoses, armrests, door trims, console lids, mats). Among these, the thermoplastic elastomer composition of the present invention and its molded article is suitable for applications such as miscellaneous goods and automobile parts that require excellent moldability due to diversified designs.

EXAMPLES

Hereinafter, the contents of the present invention will be described in further detail with reference to Examples. The present invention is not limited to the following Examples as long as the present invention is within the gist thereof. The values of various production conditions and evaluation results in the following Examples are to be understood as preferred upper or lower limit values of embodiments of the present invention, and preferred ranges may be a range defined by a

**EP 4 474 430 A1**

combination of the upper or lower limit value and a value of an Example described below or by a combination of values of Examples described below.

[Raw materials]

The raw materials used in the following Examples and Comparative Examples are as follows.

<Component (A)>

A-1: Propylene homopolymer

"Novatec (registered trademark) PP FA3KM" manufactured by Japan Polypropylene Corporation
MFR (JIS K7210, 230°C, 21.2N load): 10g/10 minutes A-2: Propylene homopolymer
"Novatec (registered trademark) PP FY6" manufactured by Japan Polypropylene Corporation
MFR (JIS K7210, 230°C, 21.2N load): 2.5g/10 minutes A-3: Propylene-ethylene random copolymer
"Novatec (registered trademark) PP MG03BD" manufactured by Japan Polypropylene Corporation
MFR (JIS K7210, 230°C, 21.2N load): 30g/10 minutes A-4: Linear low density polyethylene
"SABIC (registered trademark) LLDPE FC18N" manufactured by SPDC Ltd.
Density: $0.918g/cm^3$
MFR (JIS K7210, 190°C, 21.2N load): 1.0g/10 minutes

<Component (B)>

B-1: Styrene-ethylene-butylene-styrene copolymer (SEES)

"Tuftec (registered trademark) N504" manufactured by Asahi Kasei Corporation

B-2: Ethylene-butene copolymer rubber

"Engage (registered trademark) 7467" manufactured by Dow Chemical Company

B-3: Ethylene-propylene-ethylidene norbornene copolymer rubber

"EPT (registered trademark) 3092PM" manufactured by Mitsui Chemicals, Inc.
Mooney viscosity ($ML_{1+4}$,125°C): 65
Propylene unit content: 29.5% by mass
Ethylene unit content: 66% by mass
Ethylidene norbornene unit content: 4.5% by mass

<Component (C)>

C-1: Isoalkane mixture

"VIVA-B-FIX 10227" manufactured by H&R
Kinematic viscosity at 40°C: 56cSt
Flash point: 280°C
Pour point: -27°C
Weight average molecular weight: 1110
Molecular weight dispersity index: 1.0
Biomass degree: 100%
FD-MS spectrum is shown in Figure 1.
Main structural units: $C_{16}H_{34}$ and $C_{16}H_{32}$

16

Main component: $C_{48}H_{98}$

<Component (D)>

D-1: "Irganox (registered trademark) 1010" manufactured by BASF Japan

Hindered phenolic antioxidant

<Component (E)>

E-1: "Trigonox (registered trademark) 101-40C" manufactured by Kayaku Nourion Corporation

A mixture of 40% by mass of 2,5-dimethyl-2,5-di(t-butylperoxy)hexane and 60% by mass of calcium carbonate

<Component (F)>

F-1: "DVB-570" manufactured by Shin Nittestu Kagaku Co., Ltd.
A mixture of 55% by mass of divinylbenzene and 45% by mass of ethylvinylbenzene

<Component (X)>

X-1: Paraffin oil (not containing isoalkane)

Diana (registered trademark) "Process Oil PW-32" manufactured by Idemitsu Kosan Co., Ltd.
Kinematic viscosity at 40°C: 30.6cSt
Flash point: 222°C
Pour point: -17.5°C

X-2: Paraffin oil (not containing isoalkane)

Diana (registered trademark) "Process Oil PW-90" manufactured by Idemitsu Kosan Co., Ltd.
Kinematic viscosity at 40°C: 95.54cSt
Flash point: 272°C
Pour point: -17.5
Weight average molecular weight: 728
Molecular weight dispersity index: 1.2
FD-MS spectrum is shown in Figure 2.
Main structural unit: $CH_2$
Main component: $C_{33}H_{64}$

X-3: Paraffin oil (not containing isoalkane)

Diana (registered trademark) "Process Oil PW-380" manufactured by Idemitsu Kosan Co., Ltd.
Kinematic viscosity at 40°C: 408.8cSt
Flash point: 300°C
Pour point: -15°C
Weight average molecular weight: 1230
Molecular weight dispersity index: 1.1
FD-MS spectrum is shown in Figure 3.
Main structural unit: $CH_2$
Main component: $C_{49}H_{94}$

X-4: Isoalkane mixture

Nisseki Polybutene (registered trademark) "HV-100" manufactured by ENEOS Corporation
Kinematic viscosity at 40°C: 9,500cSt
Flash point: 210°C
Pour point: -7.5°C

X-5: Isoalkane

"Squalane" manufactured by Fujifilm Wako Pure Chemical Corporation
CAS Registry Number: 111-01-3
Chemical formula: $C_{30}H_{62}$
Kinematic viscosity at 40°C: 18.8cSt
Flash point: 224°C
Pour point: -35.5°C

[Evaluation method]

The evaluation method for the thermoplastic elastomer compositions of the following Examples and Comparative Examples is as follows.

<Moldability>

A measurement of MFR was performed on the pellets of the thermoplastic elastomer compositions obtained in Examples and Comparative Examples under the conditions of a measurement temperature of 230°C and a measurement load of 49N using a melt indexer (manufactured by Toyo Seiki Seisaku-sho, Ltd.) in accordance with ISO1133. The higher the MFR, the higher the fluidity and the better the moldability.

<Lightness>

A measurement of specific gravity was performed on the injection molded products (120 mm x 80 mm x 2 mm) manufactured in Examples and Comparative Examples by an underwater displacement method using a density meter (manufactured by Toyo Seiki Seisaku-sho, Ltd.) in accordance with ISO1183. The smaller the specific gravity, the more excellent the lightness.

<Softness>

A measurement of Duro A hardness after 15 seconds was performed on the injection molded products (120 mm x 80 mm x 2 mm) manufactured in Examples and Comparative Examples in accordance with ISO7619 to evaluate softness. The smaller the Duro A hardness value, the better the softness. Regarding the softness of the thermoplastic elastomer composition in the present invention, the Duro A hardness is equivalent within the range of $\pm 4$.

<Rubber elasticity>

A test piece was prepared by stacking six Type A disks (29 mm$\phi$) obtained by punching out the injection molded products (120 mm x 80 mm x 2 mm) manufactured in Examples and Comparative Examples. The compression set of the obtained test piece was measured at 70°C for 22 hours under 25% compression conditions in accordance with JIS K6262. The smaller the compression set value, the better the rubber elasticity. Generally, the lower the duro hardness, the better the compression set tends to be.

<Bleed-out resistance>

The injection molded products (120 mm x 80 mm x 2 mm) manufactured in Examples and Comparative Examples were punched out to create test pieces having a diameter of 80 mm. This test piece was exposed to 100°C for 72 hours using an air fogging tester, and the weight change (△ Weight) and gloss change (△ Gloss) of the test piece before and after the test were evaluated. The smaller the values of both the weight change (△ Weight) and the gloss change (△ Gloss), the better the bleed-out resistance.

<Biomass degree>

A measurement of 14C concentration was performed on the pellets of the thermoplastic elastomer composition obtained in Examples and Comparative Examples using a C-AMS dedicated device (manufactured by NEC Corporation) based on a tandem accelerator. The biomass degree was calculated from the measured value of 14C concentration according to ASTM D6866-22.

In Tables-1 and -2 below, "-" in the biomass degree column indicates that the biomass degree was not measured.

[Example/Comparative example]

<Example 1>

As shown in Table-1, 10 parts by mass of (A-1), 45 parts by mass of (B-1), 45 parts by mass of (C-1), and 0.1 parts by mass of (D-1) were mixed. The resulting mixture was melt-kneaded using a twin-screw kneader (cylinder temperature: 180 to 200°C) to produce pellets of a thermoplastic elastomer composition. The obtained thermoplastic elastomer composition was injected and filled into a sheet-like mold having a length of 120mm, a width of 80mm and a thickness of 2 mm at an injection speed of 40 mm/sec, using an electric injection molding machine (manufactured by Sumitomo Heavy Industries, Ltd.) under the conditions of a mold clamping force of 180 t, a cylinder temperature of 200°C and a mold temperature of 40°C. After filling was completed, the injection molded product was cooled for 30 seconds and then taken out. The obtained injection molded product was evaluated and the results are shown in Table-1.

<Example 2 and Comparative Examples 1 to 5>

Pellets of a thermoplastic elastomer composition were obtained in the same manner as in Example 1, except that the formulations shown in Table 1 were used. The obtained thermoplastic elastomer compositions were evaluated in the same manner as in Example 1, and the evaluation results are shown in Table-1.

<Table-1>

| Item | | | Example 1 | Example 2 | Comparative example 1 | Comparative example 2 | Comparative example 3 | Comparative example 4 | Comparative example 5 |
|---|---|---|---|---|---|---|---|---|---|
| Blend Amount (parts by mass) | Component(A) | A-1 | 10 | 10 | 10 | 10 | 10 | 10 | 10 |
| | Component(B) | B-1 | 45 | 45 | 45 | 45 | 45 | 45 | 45 |
| | Component(C) | C-1 | 45 | 22.5 | | | | | |
| | Component(X) | X-1 | | | 45 | | | | |
| | | X-2 | | 22.5 | | 45 | | | |
| | | X-3 | | | | | 45 | | |
| | | X-4 | | | | | | 45 | |
| | | X-5 | | | | | | | 45 |
| | Component(D) | D-1 | 0.1 | 0.1 | 0.1 | 0.1 | 0.1 | 0.1 | 0.1 |
| Evaluation Results | Moldability | MFR (g/10minutes) | 10.1 | 3.7 | 2.1 | 1.7 | 1.5 | 2.7 | 21.2 |
| | Lightness | Specific Gravity (g/cm$^3$) | 0.87 | 0.88 | 0.89 | 0.89 | 0.90 | 0.90 | 0.87 |
| | Flexibility | Duro A Hardness (15seconds) | 53 | 51 | 49 | 52 | 55 | 54 | 48 |
| | Rubber Elasticity | Compression Set (%) | 41 | 43 | 46 | 43 | 41 | 42 | 44 |
| | Bleed-out Resistance | Fogging Δ Gross (%) | 9 | 62 | 126 | 63 | 2 | 80 | 118 |
| | | Fogging Δ Weight(mg) | 0.3 | 0.3 | 33 | 1.0 | 0.7 | 1.8 | 5.7 |
| | Biomass Degree | Biomass Degree (%) | 44 | - | - | 0 | - | - | - |

<Example 3 and Comparative Examples 6 and 7>

Pellets of a thermoplastic elastomer composition were obtained in the same manner as in Example 1, except that the formulations shown in Table-2 were used. The obtained thermoplastic elastomer compositions were evaluated in the same manner as in Example 1, and the evaluation results are shown in Table-2.

[Table 2]

<Table-2>

| Item | | | Example 3 | Comparative example 6 | Comparative example 7 |
|---|---|---|---|---|---|
| Blend Amount (parts by mass) | Component(A) | A-2 | 25 | 25 | 25 |
| | | A-3 | 6 | 6 | 6 |
| | | A-4 | 12.5 | 12.5 | 12.5 |
| | Component(B) | B-2 | 5 | 5 | 5 |
| | | B-3 | 25 | 25 | 25 |
| | Component(C) | C-1 | 26.5 | | |
| | Component(X) | X-2 | | 26.5 | |
| | | X-3 | | | 26.5 |
| | Component(D) | D-1 | 0.1 | 0.1 | 0.1 |
| | Component(E) | E-1 | 0.5 | 0.5 | 0.5 |
| | Component(F) | F-1 | 0.5 | 0.5 | 0.5 |
| Evaluation Results | Moldability | MFR (g/10minutes) | 11.4 | 9.9 | 8.6 |
| | Lightness | Specific Gravity (g/cm$^3$) | 0.88 | 0.89 | 0.90 |
| | Flexibility | Duro A Hardness (15seconds) | 89 | 90 | 91 |
| | Rubber Elasticity | Compression Set (%) | 47 | 48 | 49 |
| | Bleed-out Resistance | Fogging △ Gross (%) | 10 | 72 | 14 |
| | | Fogging △ Weight(mg) | 0.7 | 0.9 | 0.6 |
| | Biomass Degree | Biomass Degree (%) | - | - | - |

<Evaluation results>

As shown in Tables-1 and -2, the thermoplastic elastomer compositions of Examples 1 to 3 had good moldability, lightness, rubber elasticity, and bleed-out resistance. In the thermoplastic elastomer composition of Example 1, a biomass degree corresponding to the content ratio of the component (C) was confirmed.

On the other hand, in Comparative Examples 1 to 3 and 6 to 7, in which paraffinic oil was used instead of the isoalkane mixture of the component (C), the MFR was small and the moldability was poor, especially in Comparative Examples 1, 2, and 6, the bleed-out resistance was also poor. Comparative Example 4 had a small MFR and poor moldability. Comparative Example 5 had poor bleed-out resistance.

Industrial Applicability

The thermoplastic elastomer composition of the present invention has excellent moldability, lightness, rubber elasticity, and bleed-out resistance, so it can be used in a wide range of fields such as civil engineering and construction parts (waterstop materials, joint materials, window frames), sporting goods, industrial parts (multilayer hose tubes), home appliance parts (multilayer hoses), medical components (medical multilayer containers, syringe gaskets, rubber stoppers), food components (multilayer packaging films, containers, bottles, design packagings, labels, cap liners, packings), electric wires, sundry goods, and automotive parts (weather strips, ceiling materials, interior sheets, bumper moldings, side moldings, air spoilers, hoses, armrests, door trims, console lids, mats). In particular, the thermoplastic elastomer composition of the present invention is suitable for applications such as sundry goods and automotive parts that require excellent moldability due to diversified designs.

Although the present invention has been described in detail with reference to particular embodiments, it will be apparent to those skilled in the art that various changes may be made thereto without departing from the spirit and scope of the present invention.

The present application is based on Japanese Patent Application No. 2022-013133 filed on January 31, 2022, which is herein incorporated in its entirety by reference.

Industrial Applicability

**Claims**

1. A thermoplastic elastomer composition comprising the components (A) to (C) listed below,

   wherein the component (C) has a kinematic viscosity at 40°C of 20 cSt or more and 8000 cSt or less.
   component (A): thermoplastic resin
   component (B): elastomer
   component (C): isoalkane mixture

2. The thermoplastic elastomer composition according to claim 1, wherein the component (C) has a kinematic viscosity at 40°C of 20 cSt or more and 3000 cSt or less.

3. A thermoplastic elastomer composition comprising the components (A) to (C) listed below,

   wherein a main structural unit identified from a mass spectrum obtained by measuring the component (C) by FD-MS is represented by at least one of the molecular formulas $C_{16}H_{34}$ and $C_{16}H_{32}$.
   component (A): thermoplastic resin
   component (B): elastomer
   component (C): isoalkane mixture

4. The thermoplastic elastomer composition according to claim 3, wherein the component (C) contains as a main component at least one of the compounds represented by the molecular formulas $C_{48}H_{96}$ and $C_{48}H_{98}$, which are identified from the mass spectrum obtained by measuring the component (C) by FD-MS.

5. A thermoplastic elastomer composition comprising the components (A) to (C) listed below,

   wherein the component (C) is an isoalkane mixture containing as a main component at least one of the compounds represented by the molecular formulas $C_nH_{2n+2}$ and $C_nH_{2n}$ ($40 \leqq n < 60$), which are identified from a mass spectrum obtained by measuring the component (C) by FD-MS.
   component (A): thermoplastic resin
   component (B): elastomer
   component (C): isoalkane mixture

6. The thermoplastic elastomer composition according to claim 5, wherein the component (C) further comprises at least one of the compounds represented by the molecular formulas $C_nH_{2n+2}$ and $C_nH_{2n}$ ($30 \leqq n < 40$), which are identified from the mass spectrum obtained by measuring the component (C) by FD-MS.

7. The thermoplastic elastomer composition according to claim 5, wherein the component (C) further comprises at least one of the compounds represented by the molecular formulas $C_nH_{2n+2}$ and $C_nH_{2n}$ ($60 \leqq n \leqq 80$), which are identified from the mass spectrum obtained by measuring the component (C) by FD-MS.

8.  The thermoplastic elastomer composition according to claim 5, wherein the component (C) further comprises at least one of the compounds represented by the molecular formulas $C_nH_{2n+2}$ and $C_nH_{2n}$ ($30 \leqq n < 40$) and at least one of the compounds represented by the molecular formulas $C_nH_{2n+2}$ and $C_nH_{2n}$ ($60 \leqq n \leqq 80$), which are identified from the mass spectrum obtained by measuring the component (C) by FD-MS.

9.  The thermoplastic elastomer composition according to any one of claims 1 to 8, wherein the component (C) is derived from a biomass material.

10. The thermoplastic elastomer composition according to claim 9, having a biomass degree of 1% or more and 100% or less according to ASTM D 6866-22.

11. The thermoplastic elastomer composition according to any one of claims 1 to 10, wherein the thermoplastic resin of the component (A) contains at least one of a polyolefin resin and a polyester resin.

12. The thermoplastic elastomer composition according to any one of claims 1 to 11, wherein the elastomer of the component (B) contains at least one of an olefinic elastomer, a styrene elastomer, and a polyester elastomer.

13. The thermoplastic elastomer composition according to any one of claims 1 to 12, wherein the composition comprises 10 parts by mass or more and 400 parts by mass or less of the component (C) based on 100 parts by mass of the component (B).

14. The thermoplastic elastomer composition according to any one of claims 1 to 13, wherein the component (C) has a pour point of -50° C or higher and 0° C or lower.

15. The thermoplastic elastomer composition according to any one of claims 1 to 14, wherein the component (C) contains an isoalkane having a side chain alkyl group.

16. The thermoplastic elastomer composition according to claim 15, wherein the alkyl group is an alkyl group having 1 to 18 carbon atoms.

17. The thermoplastic elastomer composition according to claim 16, wherein the alkyl group is a methyl group.

18. The thermoplastic elastomer composition according to any one of claims 1 to 17, further comprising a hydrocarbon-based softening agent for rubber, the softening agent being other than the component (C).

19. The thermoplastic elastomer composition according to claim 18, wherein the content of the component (C) is 1% by mass or more and 99% by mass or less based on a total content of the component (C) and the hydrocarbon-based softening agent for rubber.

20. A molded article obtained by molding the thermoplastic elastomer composition according to any one of claims 1 to 19.

EP 4 474 430 A1

Fig.1

"VIVA-B-FIX 10227" manufactured by H&R

Creation conditions:

Average (MS[1] Elapsed time: 0.06, 0.45) - 1.0 *Average (MS[1] Elapsed time: 0.52, 0.58): Base correction []

Ionization mode: FD+ (eiFi)

Fig. 2

Diana (registered trademark) "Process Oil PW-90"
manufactured by Idemitsu Kosan Co., Ltd.

Creation conditions:

Average (MS[1] Elapsed time: 0.07, 0.39) - 1.0 *Average (MS[1] Elapsed time: 0.54, 0.64): Base correction []     Ionization mode: FD+ (eiFi)

EP 4 474 430 A1

Fig.**3**   Diana (registered trademark) "Process Oil PW-380" manufactured by Idemitsu Kosan Co., Ltd.

Creation conditions:

Average (MS[1] Elapsed time: 0.06, 0.41) - 1.0 *Average (MS[1] Elapsed time: 0.88, 0.96): Base correction []

Ionization mode: FD+ (eiFi)

## INTERNATIONAL SEARCH REPORT

| | International application No. |
|---|---|
| | **PCT/JP2023/002812** |

**A. CLASSIFICATION OF SUBJECT MATTER**

*C08L 101/00*(2006.01)i; *C08K 5/01*(2006.01)i; *C08L 23/00*(2006.01)i; *C08L 67/00*(2006.01)i; *C08L 91/00*(2006.01)i
FI: C08L101/00; C08L23/00; C08L67/00; C08L91/00; C08K5/01

According to International Patent Classification (IPC) or to both national classification and IPC

**B. FIELDS SEARCHED**

Minimum documentation searched (classification system followed by classification symbols)

C08K5/01; C08L23/00; C08L67/00; C08L91/00; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-281489 A (RIKEN TECHNOS CORP) 13 October 2005 (2005-10-13) | 1-20 |
| A | WO 2009/022499 A1 (UNIMATEC CO., LTD.) 19 February 2009 (2009-02-19) | 1-20 |
| A | WO 2008/139512 A1 (ARONKASEI CO., LTD.) 20 November 2008 (2008-11-20) | 1-20 |
| A | JP 2013-159666 A (SUMITOMO RUBBER IND LTD) 19 August 2013 (2013-08-19) | 1-20 |

☐ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 March 2023** | **28 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/002812**

| Patent document cited in search report | | | Publication date (day/month/year) | Patent family member(s) | | | Publication date (day/month/year) |
|---|---|---|---|---|---|---|---|
| JP | 2005-281489 | A | 13 October 2005 | (Family: none) | | | |
| WO | 2009/022499 | A1 | 19 February 2009 | EP | 2177564 | A1 | |
| WO | 2008/139512 | A1 | 20 November 2008 | (Family: none) | | | |
| JP | 2013-159666 | A | 19 August 2013 | (Family: none) | | | |

Form PCT/ISA/210 (patent family annex) (January 2015)

**REFERENCES CITED IN THE DESCRIPTION**

**Patent documents cited in the description**

- JP 2000169666 A
- JP H10130451 A
- JP 2022013133 A

**Non-patent literature cited in the description**

- *CHEMICAL ABSTRACTS*, 111-01-3